# EUROPÄISCHE PATENTANMELDUNG

(11) **EP 2 503 124 A1**
(43) Veröffentlichungstag der Anmeldung: **26.09.2012**
(21) Anmeldenummer: 12158473.4
(22) Anmeldetag: 07.03.2012
(51) Int. Cl.: F02B 27/02, F02B 37/00

(54) **Brennkraftmaschine, Frischluftanlage und zugehöriges Betriebsverfahren**

(30) Priorität: 23.03.2011 DE 102011005941
(71) Anmelder: MAHLE International GmbH, 70376 Stuttgart (DE)
(72) Erfinder: Stehlig, Jürgen, 72654 Neckartenzlingen (DE); Bruggesser, Veit, 71157 Hildrizhausen (DE); Dingelstadt, René, 70374 Stuttgart (DE); Elflein, Simon, 76227 Karlsruhe (DE); Gurney, David, Northampton, Northamptonshire NN1 45A (GB); Handel, Rainer, 70597 Stuttgart (DE); Letterer, Sven, 70435 Stuttgart (DE); Taylor, James, Northampton, Northamptonshire NN4 6AP (GB); Wieske, Peter, 70825 Korntal-Münchingen (DE)
(74) Vertreter: Bernhard, Uwe

(57) **Zusammenfassung**

Die vorliegende Erfindung betrifft ein Verfahren zum Betreiben einer Brennkraftmaschine (1), insbesondere eines Kraftfahrzeugs, die eine Frischluftanlage (5) mit einer Aufladeeinrichtung (16), mit einem Ladeluftkühler (17) und mit einer variablen Schwingsrohr- und/oder Resonanzanlage (18) aufweist.

Ein verbesserter Wirkungsgrad lässt sich erreichen, wenn die Schwingrohr- und/oder Resonanzanlage (18) in einem Bereich niedriger Drehzahlen der Brennkraftmaschine (1) in einem Kompressionsmodus betrieben wird, bei dem Druckschwingungen in der Anlage (18) so erzeugt werden, dass bei Gaswechselvorgängen von Brennräumen (4) der Brennkraftmaschine (1) positive Schwingungsamplituden in den Brennräumen (4) eingeschlossen werden und darin den Ladedruck erhöhen, und wenn die Schwingrohr- und /oder Resonanzanlage (18) in einem Bereich hoher Drehzahlen der Brennkraftmaschine (1) in einem Expansionsmodus betrieben wird, bei dem Druckschwingungen in der Anlage (18) so erzeugt werden, dass bei den Gaswechselvorgängen negative Schwingungsamplituden in den Brennräumen (4) eingeschlossen werden und darin den Ladedruck absenken.

## Beschreibung

Die vorliegende Erfindung betrifft ein Verfahren zum Betreiben einer Brennkraftmaschine, insbesondere eines Kraftfahrzeugs, mit den Merkmalen des Oberbegriffs des Anspruchs 1. Ferner betrifft die vorliegende Erfindung eine Frischluftanlage für eine Brennkraftmaschine, insbesondere eines Kraftfahrzeugs, mit den Merkmalen des Oberbegriffs des Anspruchs 6 sowie eine mit einer solchen Frischluftanlage ausgestattete Brennkraftmaschine.

Aus der DE 10 2007 014 447 A1 ist eine Brennkraftmaschine, nämlich ein Ottomotor, mit einer Frischluftanlage bekannt, wobei die Frischluftanlage eine Aufladeeinrichtung, einen Ladeluftkühler und eine variable Resonanzanlage, nämlich in Form einer Schwingrohranlage und/oder in Form einer Resonanzvolumenanlage, aufweist. Die bekannte Brennkraftmaschine wird gezielt so betrieben, dass vorzugsweise über den gesamten Drehzahlbereich der Brennkraftmaschine Resonanzen in der Frischluftanlage minimiert oder sogar eliminiert werden können, wobei insbesondere zusätzliche Aufladeeffekte durch derartige Resonanzen minimiert werden sollen.

Die vorliegende Erfindung beschäftigt sich mit dem Problem, für eine aufgeladene Brennkraftmaschine einen Weg aufzuzeigen, der insbesondere eine Verbesserung des energetischen Wirkungsgrads ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, eine Frischluftanlage für eine Brennkraftmaschine, welche über eine variable Schwingrohraufladung und/oder eine variable Resonanzaufladung verfügt, in einem Bereich niedriger Drehzahlen der Brennkraftmaschine in einem Kompressionsmodus zu betreiben und in einem Bereich mittlerer und hoher Drehzahlen in einem Expansionsmodus zu betreiben. Derartige Frischluftanlagen sind sowohl für Otto-Motoren, als auch für Diesel-Motoren verwendbar. Im Kompressionsmodus werden Druckschwingungen in der Frischluftanlage gezielt so erzeugt, dass bei Gaswechselvorgängen von Brennräumen der Brennkraftmaschine positive Schwingungsamplituden, also Druckberge in den Brennräumen eingeschlossen werden und so den Ladedruck im jeweiligen Brennraum erhöhen. Mit anderen Worten, im Kompressionsmodus kann in den jeweiligen, zu beladenden Brennraum eine positive Schwingungsamplitude unmittelbar vor dem Einlassschließen einlaufen. Im Unterschied dazu werden im Expansionsmodus Druckschwingungen in der Frischluftanlage gezielt so erzeugt, dass bei den Gaswechselvorgängen negative Schwingungsamplituden, also Drucktäler in den Brennräumen eingeschlossen werden und so im jeweiligen Brennraum den Ladedruck reduzieren. Mit anderen Worten, die Abstimmung der Frischluftanlage erfolgt im Expansionsmodus gezielt so, dass beim Beladen des jeweiligen Brennraums eine negative Druckamplitude unmittelbar vor dem Einlassschließen eintritt. Für den Bereich niedriger Drehzahlen kann somit der Ladedruck über das Druckniveau der Ladeeinrichtung erhöht werden, was den Abgasmassenstrom erhöht und letztlich bei Verwendung eines Abgasturboladers auch zu einer verbesserten Leistung des Abgasturboladers führt. Im Bereich mittlerer und hoher Drehzahlen bewirkt die Absenkung des Ladedrucks eine Temperaturabsenkung im Brennraum, was zur Optimierung von Verbrennungsvorgängen und einer Minimierung der Klopfneigung genutzt werden kann. Bspw. kann der Zündzeitpunkt nach vorne verschoben werden, was zur Reduzierung des Kraftstoffverbrauchs bei gleicher Leistung genutzt werden kann. Alternativ kann bei gleichem Kraftstoffverbrauch die Leistung gesteigert werden.

Die zur Abgrenzung der Drehzahlbereiche verwendeten Adjektive "niedriger", "mittlerer" und "hoher" sind nicht als absolute Größenangaben zu verstehen, sondern als relative Größenangaben, sodass nur zum Ausdruck gebracht werden soll, dass im Bereich niederer Drehzahlen kleinere Drehzahlen vorliegen als im Bereich mittlerer Drehzahlen und im Bereich mittlerer Drehzahlen kleinere Drehzahlen vorliegen als im Bereich hoher Drehzahlen.

Entsprechend einer vorteilhaften Ausführungsform kann im Bereich mittlerer und hoher Drehzahlen außerdem die Aufladeeinrichtung zum Erhöhen des Ladedrucks angesteuert werden. Durch diese Maßnahme kann die durch den Expansionsmodus in den Brennräumen realisierte Druckabsenkung wieder mehr oder weniger kompensiert werden, nämlich durch eine entsprechend angepasste Druckerhöhung durch die Ladeeinrichtung. Da der Ladeeinrichtung ein Ladeluftkühler nachgeordnet ist, führt die Erhöhung des Druckniveaus zu keiner nennenswerten Temperaturerhöhung. Durch den Expansionsmodus sinkt sowohl das Druckniveau, als auch die Ladelufttemperatur im jeweiligen Brennraum. Das Druckniveau entspricht somit einem "normalen" Wert, der üblicherweise mit der Ladeeinrichtung erzeugt wird. Durch die Expansion kühlt sich die Ladeluft ab. Im Vergleich eines üblicherweise erzeugten Druckniveaus mit der definierten Temperatur ist die im Expansionsmodus erzeugte Ladeluft bei gleichem Druckniveau kühler. Somit ist es möglich, den Zündzeitpunkt zeitlich nach vorne zu verschieben, ohne dass die Abgastemperatur, Verbrennung oder die Klopfneigung negativ beeinflusst werden.

Besonders vorteilhaft handelt es sich bei der Aufladeeinrichtung um einen Abgasturbolader, dessen Turbine ein Bypassventil, das auch als Waste-Gate-Ventil bezeichnet werden kann, zum Steuern eines die Turbine bzw. ein Turbinenrad der Turbine umgehenden Bypassstroms, der auch als Waste-Gate-Strom bezeichnet werden kann, aufweist. Im Bereich mittlerer und hoher Drehzahlen kann dann das Bypassventil zum Reduzieren des Bypassstroms angesteuert werden. In der Folge erhöht sich der durch die Turbine geleitete Hauptstrom, was den Druck auf der Verdichterseite des Abgasturboladers erhöht. Somit dient auch hier die Ansteuerung des Bypassventils zur Kompensation der Druckabsenkung, die durch den Expansionsmodus der Frischluftanlage erzeugt werden kann.

Zusätzlich oder alternativ kann bei einer als Abgasturbolader ausgestalteten Aufladeeinrichtung eine Turbine mit einer variablen Turbinengeometrie zum Steuern eines Einströmquerschnitts zu einem Turbinenrad der Turbine ausgestattet sein. Im Bereich hoher Drehzahlen kann dann die variable Turbinengeometrie zum Reduzieren des Einströmquerschnitts angesteuert werden, was die Strömungsgeschwindigkeit des Abgas erhöht und zu einer Beschleunigung der Turbine und somit zu einer Leistungssteigerung der Turbine führt. Auch dies kann zur Kompensation der im Expansionsmodus erzielbaren Druckabsenkung genutzt werden.

Besonders vorteilhaft ist eine Ausführungsform, bei welcher die Frischluftanlage als Schwingrohranlage ausgestaltet ist, die eine Verteilerkammer aufweist, von der einzelne Schwingrohre zu den Brennkammern abgehen und zu der ein gemeinsames Zuführrohr hinführt. Das gezielte Erzeugen der Druckschwingungen erfolgt dabei durch Variieren der Länge der Schwingrohre und/oder der Länge des Zuführrohrs. Hierbei können die Schwingrohre über zwei, drei oder mehr unterschiedliche Längen verfügen, welche definierten Zuständen des Motors zugeordnet sind. Die Schwingrohrlängen können zur Anpassung der Schwingrohre an die unterschiedlichen Betriebszustände der Brennkraftmaschinen auch stufenlos verstellbar ausgeführt sein.

Die für den jeweiligen Betriebszustand einzustellende Länge des Schwingrohres ist vorzugsweise von der Ladelufttemperatur abhängig. Die Druckwellen bewegen sich in dem Schwingrohr mit Schallgeschwindigkeit. Da die Schallgeschwindigkeit von der Temperatur abhängt, ist die Druckwellengeschwindigkeit in den Schwingrohren bei unterschiedlichen Temperaturen unterschiedlich. Somit kann vorzugsweise zur Einstellung der Schwingrohrlänge zusätzlich zur Motordrehzahl noch die Ladelufttemperatur herangezogen werden, um eine optimale Einstellung der Schwingrohrlänge zu erreichen. Die Erfassung der Ladelufttemperatur und der Motordrehzahl kann hierbei vorteilhaft durch die Motorsteuerung erfolgen, welche auch die Schwingrohrlängenanpassung steuert. Dabei kann die Motorsteuerung beispielsweise auf Kennfelder zugreifen, welche die Zusammenhänge von einzustellenden Schwingrohrlängen, Motordrehzahl und Ladelufttemperatur abbilden. Ebenso können diese Zusammenhänge in Berechnungsmodellen abgebildet sein, die in Echtzeit eine Berechnung der jeweils erforderlichen Schwingrohrlänge abhängig von der aktuellen Motordrehzahl und der aktuellen Ladelufttemperatur ermöglichen.

Gemäß einer anderen vorteilhaften Ausführungsform kann die Aufladeeinrichtung als Abgasturbolader ausgestaltet sein und die Brennkraftmaschine kann einen variablen Ventiltrieb aufweisen. Im Bereich niedriger Drehzahlen kann nun zum Beschleunigen der Brennkraftmaschine vorgesehen sein, bei den Gaswechselvorgängen den Ventiltrieb zum Erzeugen einer Spülphase anzusteuern, die sich **dadurch charakterisiert, dass** während der Spülphase am jeweiligen Brennraum wenigstens ein Einlassventil und wenigstens ein Auslassventil gleichzeitig zumindest teilweise geöffnet sind. Hierdurch ist es möglich, dass Ladeluft durch den Brennraum hindurchströmt und dadurch den Abgasstrom zur Beaufschlagung der Turbine des Abgasturboladers vergrößert. Hierdurch kann der Abgasturbolader schneller hochdrehen. Auf diese Weise kann somit die Beschleunigung des Abgasturboladers und letztlich auch die Beschleunigung der Brennkraftmaschine verbessert werden. Ein weiterer Vorteil der Spülung der Brennräume ist, dass die Brennräume vollständig entleert werden und nahezu keine Restgase in den Brennräumen verbleiben. Somit ist für die nachfolgende Verbrennung ein besserer effektiverer Verbrennungsprozess möglich und die Bildung von zusätzlichen Schadstoffen wird reduziert oder sogar verhindert.

Damit eine Frischluftanlage mit Aufladeeinrichtung, Ladeluftkühler und variabler Resonanz- oder Schwingrohranlage entsprechend dem vorbeschriebenen Verfahren betrieben werden kann, ist diese mit einer entsprechenden Steuerung zum Betreiben der Frischluftanlage abhängig von der Drehzahl der Brennkraftmaschine ausgestattet. Diese Steuerung kann dann die Frischluftanlage zur Realisierung des Kompressionsmodus sowie zur Realisierung des Expansionsmodus ansteuern, um bei niedrigen Drehzahlen in den Brennräumen den Ladedruck zu erhöhen und bei mittleren und hohen Drehzahlen in den Brennräumen den Ladedruck zu reduzieren. Optional kann diese Steuerung außerdem zum Betreiben bzw. zum Ansteuern der Aufladeeinrichtung konzipiert sein, um für die mittleren und hohen Drehzahlen außerdem die Aufladeeinrichtung zum Erhöhen des Ladedrucks ansteuern zu können. Ebenso kann die Steuerung zum Betätigen des vorgenannten Bypassventils oder Waste-Gate-Ventils konzipiert sein, um in den Bereichen mittlerer und hoher Drehzahlen das Bypassventil zum Reduzieren des Bypassstroms anzusteuern. Zusätzlich oder alternativ kann die Steuerung zum Betätigen der vorgenannten variablen Turbinengeometrie konzipiert sein, um in den Bereichen mittlerer und hoher Drehzahlen die variable Turbinengeometrie zum Reduzieren des Einströmquerschnitt zum Turbinenrad der Turbine anzusteuern.

Sofern die Frischluftanlage als Schwingrohranlage konzipiert ist, kann die Steuerung zum Betreiben bzw. zum Ansteuern einer Stelleinrichtung ausgestaltet sein, mit deren Hilfe die Länge der Saugrohre und/oder die Länge des Zuführrohrs variiert werden kann. Bei einer Ausbildung der Frischluftanlage als Resonanzanlage sind mehrere Teilbereiche und/oder Rohrleitungen vorgesehen, welche öffen-/verschließbar ausgeführt sind. Durch gezieltes Öffnen bzw. Verschließen werden Strömungswege definiert, welche von den Druckwellen in der Frischluftanlage zurückgelegt werden müssen. Somit kann der Zeitpunkt, bei welchem die Druckwelle an einem bestimmten Ort ankommt, beeinflusst werden.

Gemäß einer besonders vorteilhaften Ausführungsform kann der Ladeluftkühler der Frischluftanlage eine selbsttätig arbeitende Temperaturregelung für die Temperatur der Ladeluft aufweisen. Somit passt sich die Kühlleistung des Ladeluftkühlers automatisch an die Temperatur der Ladeluft an, sodass die bei mittlerer und hoher Drehzahl an der Ladeeinrichtung erzeugte Druckerhöhung zwar zunächst mit einer Temperaturerhöhung einhergeht, die jedoch durch die automatische Anpassung der Leistung des Ladeluftkühlers mehr oder weniger ausgeglichen werden kann.

Der Ladeluftkühler kann mit Hilfe eines Luftstroms gekühlt sein, der bspw. mit Hilfe eines Lüfters erzeugt werden kann. Alternativ kann der Ladeluftkühler mit Hilfe eines flüssigen Kühlmittels gekühlt werden, wobei eine Kühlmittelpumpe zum Erzeugen eines Kühlmittelstroms vorgesehen ist. Zur Regelung der Kühlleistung des Ladeluftkühlers kann nun die Lüfterdrehzahl bzw. die Pumpendrehzahl variiert werden, bspw. abhängig von der Ladelufttemperatur am Einlass und/oder am Auslass des Ladeluftkühlers. Insbesondere bei Diesel-Motoren ist eine Kühlung der Ladeluft vorteilhaft, um eine Steigerung der Motorleistung oder eine Senkung der Emissionen zu erzielen. Diese Kühlung der Ladeluft kann auch durch den Expansionsmodus erreicht werden.

Eine erfindungsgemäße Brennkraftmaschine ist mit einer Frischluftanlage der vorbeschriebenen Art ausgestattet und enthält mehrere Brennräume in Zylindern, in denen Kolben hubverstellbar angeordnet sind. Ferner sind Gaswechselventile zum Steuern von Gaswechselvorgängen der Brennräume vorgesehen sowie ein Ventiltrieb zum Betätigen bzw. zum Ansteuern der Gaswechselventile. Gemäß einer besonders vorteilhaften Ausführungsform kann die Aufladeeinrichtung wieder als Abgasturbolader ausgestaltet sein und der Ventiltrieb kann als variabler Ventiltrieb ausgestaltet sein. Eine Steuerung zum Betreiben des Ventiltriebs kann nun so konzipiert sein, dass sie bei niedrigen Drehzahlen zum Beschleunigen der Brennkraftmaschine bzw. zum Beschleunigen des Abgasturboladers bei Gaswechselvorgängen den Ventiltrieb zum Erzeugen einer Spülphase der vorstehend beschriebenen Art ansteuert.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

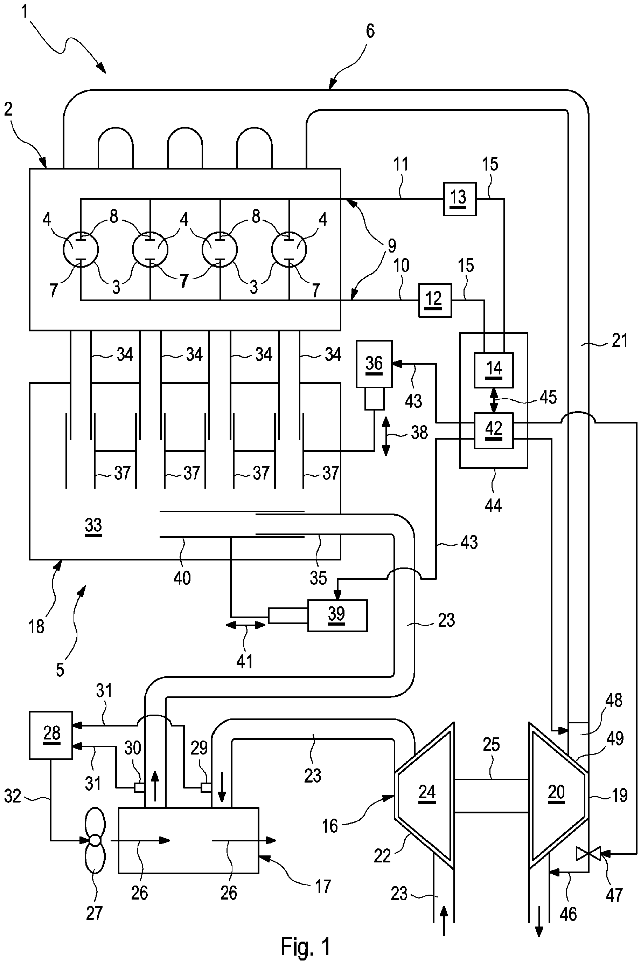

Die einzige Figur 1 zeigt eine stark vereinfachte, schaltplanartige Prinzipdarstellung einer Brennkraftmaschine mit Frischluftanlage.

Entsprechend Fig. 1 umfasst eine Brennkraftmaschine 1, insbesondere eines Kraftfahrzeugs, einen Motorblock 2 mit mehreren Zylindern 3, die jeweils einen Brennraum 4 umschließen und in denen jeweils ein hier nicht gezeigter Kolben hubverstellbar angeordnet ist. Die Brennkraftmaschine 1 umfasst außerdem eine Frischluftanlage 5 zum Zuführen von Frischluft zu den Brennräumen 4 des Motorblocks 2 sowie eine Abgasanlage 6 zum Wegführen von Verbrennungsabgasen von den Brennräumen 4 des Motorblocks 2. Die Brennkraftmaschine 1 umfasst außerdem mehrere Gaswechselventile, nämlich Einlassventile 7 und Auslassventile 8 zum Steuern von Gaswechselvorgängen bei den Brennräumen 4. In der vereinfachten Darstellung der Fig. 1 ist je Brennraum 4 genau ein Einlassventil 7 und genau ein Auslassventil 8 angedeutet. Es ist jedoch klar, dass je Brennraum 4 auch mehrere Einlassventile 7 und/oder mehrere Auslassventile 8 vorgesehen sein können. Zum Betätigen der Einlassventile 7 und der Auslassventile 8, also zum Betätigen der Gaswechselventile 7,8 weist die Brennkraftmaschine 1 einen Ventiltrieb 9 auf, der im Beispiel der Fig. 1 einen den Einlassventilen 7 zugeordneten Einlassventilstrang 10 und einen den Auslassventilen 8 zugeordneten Auslassventilstrang 11 aufweist. Der Einlassventilstrang 10 dient zum Betätigen der Einlassventile 7, während der Auslassventilstrang 11 zum Betätigen der Auslassventile 8 dient. Das Betätigen der Ventile 7,8 beinhaltet dabei das Ansteuern der Ventile 7,8 zum Öffnen und Schließen. Zweckmäßig ist der Ventiltrieb 9 variabel konzipiert, sodass insbesondere dem Einlassventilstrang 10 ein Einlassphasensteller 12 und/oder dem Auslassventilstrang 11 ein Auslassphasensteller 13 zugeordnet sein kann. Mit Hilfe des Einlassphasenstellers 12 können die Schließzeiten und Öffnungszeiten der Einlassventile 7 variiert werden. Mit dem Auslassphasensteller 13 können die Schließzeiten und die Öffnungszeiten der Auslassventile 8 variiert werden. Der variable Ventiltrieb 9 besitzt entweder nur den Einlassphasensteller 12 oder nur den Auslassphasensteller 13 oder sowohl den Einlassphasensteller 12 als auch den Auslassphasensteller 13. Eine Steuerung 14 dient zum Betätigen bzw. zum Ansteuern des variablen Ventiltriebs 9 und ist hierzu über entsprechende Steuerleitungen 15 mit dem jeweiligen Phasensteller 12,13 verbunden.

Die Frischluftanlage 5 umfasst eine Aufladeeinrichtung 16, einen Ladeluftkühler 17 und eine variable Schwingrohranlage 18. Die Aufladeeinrichtung 16 ist hier als Abgasturbolader ausgestaltet, der im Folgenden ebenfalls mit 16 bezeichnet werden kann. Der Turbolader 16 umfasst in üblicher Weise eine Turbine 19 mit einem Turbinenrad 20, wobei die Turbine 19 in einer Abgasleitung 21 der Abgasanlage 6 angeordnet ist. Der Turbolader 16 umfasst außerdem einen Verdichter 22, der in einer Frischluftleitung 23 der Frischluftanlage 5 angeordnet ist und ein Verdichterrad 24 aufweist, das über eine Antriebswelle 25 mit dem Turbinenrad 20 drehfest verbunden ist.

Der Ladeluftkühler 17 ist stromab des Verdichters 22 in der Frischluftleitung 23 angeordnet und dient zur Kühlung der Ladeluft. Im Beispiel wird der Ladeluftkühler 17 mit Hilfe einer durch Pfeile angedeuteten Luftströmung 26 gekühlt, die bspw. mittels eines Lüfters 27 erzeugt bzw. verstärkt werden kann. Eine Grundströmung der Luftströmung 26 kann bspw. durch den Fahrtwind eines mit der Brennkraftmaschine 1 ausgestatteten Fahrzeugs erzeugt werden. Dem Ladeluftkühler 17 kann eine Steuerung 28 zugeordnet sein, mit deren Hilfe die Leistung des Ladeluftkühlers 17 selbsttätig gesteuert bzw. geregelt werden kann. Bspw. ist die Steuerung 28 hierzu eingangsseitig mit einem ersten Temperatursensor 29 verbunden, der eine Ladelufttemperatur stromauf des Ladeluftkühlers 17 misst. Zusätzlich oder alternativ kann die Steuerung 28 mit einem zweiten Temperatursensor 30 verbunden sein, der die Ladelufttemperatur stromab des Ladeluftkühlers 17 misst. Entsprechende Signalleitungen 31 verbinden den jeweiligen Temperatursensor 29,30 mit der Steuerung 28. Des Weiteren ist die Steuerung 28 über eine Steuerleitung 32 mit dem Lüfter 27 verbunden, sodass die Steuerung 28 abhängig von der Ladelufttemperatur stromauf und/oder stromab des Ladeluftkühlers 17 den Lüfter 27 betreiben bzw. ansteuern kann, um die Kühlleistung des Ladeluftkühlers 17 durch Variieren des Luftstroms 26 an den Kühlbedarf der Ladeluft anpassen zu können.

Zusätzlich oder alternativ zu der Schwingrohranlage 18 kann eine Resonanzanlage (nicht dargestellt) vorgesehen sein, welche die Frischluftanlage 5 in zwei oder mehrere Teilbereiche unterteilt, zwischen welchen z.B. durch Öffnen/Schließen von Klappen eine Resonanzschwingung erzeugt werden kann. Weiterhin können zur Bildung einer Resonanzanlage zusätzliche, insbesondere schaltbare Rohrleitungen erforderlich sein. Die Schwingrohranlage 18 umfasst eine Verteilerkammer 33, mehrere Schwingrohre 34, die je einem Brennraum 4 zugeordnet sind, und ein gemeinsames Zuführrohr 35. Die Schwingrohre 34 gehen von der Verteilerkammer 33 zu den einzelnen Brennräumen 4 ab. Das Zuführrohr 35 führt in die Verteilerkammer 33 hinein und verbindet die Verteilerkammer 33 mit der Frischluftleitung 23. Die variable Schwingrohranlage 18 ist mit einer Stelleinrichtung 36 zum Verändern einer Länge der Saugrohre 34 ausgestattet. Hierbei handelt es sich um die primäre Länge der Schwingrohranlage 18. Die primäre Länge kann bspw. mittels Hülsen 37 oder Klappen variiert werden, die innerhalb der Verteilerkammer 33 auf die Schwingrohre 34 aufgesetzt sind und relativ zu den Schwingrohren 34 entsprechend einem Doppelpfeil 38 verstellbar sind. Zusätzlich oder alternativ kann eine Stelleinrichtung 39 vorgesehen sein, mit deren Hilfe die Länge des Zuführrohrs 35 variiert werden kann. Hierbei handelt es sich um die sekundäre Länge der Schwingrohranlage 18. Bspw. kann zum Variieren der sekundären Länge eine Hülse 40 innerhalb der Verteilerkammer 33 auf das Zuführrohr 35 aufgesteckt sein, die mit Hilfe der Stelleinrichtung 39 entsprechend einem Doppelpfeil 41 relativ zum Zuführrohr 35 verstellbar ist. Eine Steuerung 42 ist über entsprechende Steuerleitungen 43 mit den Stelleinrichtungen 36,39 verbunden, sodass die Steuerung 42 die Stelleinrichtungen 36,39 betätigen bzw. betreiben bzw. ansteuern kann. Die beiden hier gezeigten Stelleinrichtungen 36,39 zum Variieren der Schwingsrohranlage 18 sind nur beispielhaft zu verstehen. Es ist klar, dass die Variation der Schwingrohranlage 18 auch mit anderen Maßnahmen realisierbar ist, bspw. mit Hilfe von Klappen und dergleichen.

In Fig. 1 ist außerdem mit einem Rahmen ein Motorsteuergerät 44 angedeutet, das die Steuerung 42 zum Betreiben der Schwingrohranlage 18 und die Steuerung 14 zum Betreiben des Ventiltriebs 9 beinhaltet, die miteinander entsprechend einem Doppelpfeil 45 kommunizieren können. Grundsätzlich kann auch die Steuerung 28 zum Betreiben des Ladeluftkühlers 17 in das Motorsteuergerät 44 integriert sein. Die Integration der einzelnen Steuerungen 14,28,42 in das Motorsteuergerät 44 kann dabei hardwaremäßig und/oder softwaremäßig erfolgen. Das Motorsteuergerät 44 kennt die aktuelle Drehzahl der Brennkraftmaschine 1. Durch eine entsprechende kommunizierende Verbindung kennt zumindest die Steuerung 42 ebenfalls die Drehzahl der Brennkraftmaschine 1.

Die Turbine 19 des Abgasturboladers 16 kann zweckmäßig mit einem Bypass 46 ausgestattet sein, der die Turbine 19 bzw. deren Turbinenrad 20 umgeht und der mit Hilfe eines Bypassventils 47 gesteuert werden kann. Zweckmäßig wird dieses Bypassventil 47 von der Steuerung 42 bzw. vom Steuergerät 44 angesteuert.

Die Turbine 19 des Abgasturboladers 16 kann zusätzlich oder alternativ zum Bypass 46 mit einer variablen Turbinengeometrie 48 ausgestattet sein, mit deren Hilfe ein Einströmquerschnitt 49 am Einlass des Turbinenrads 20 gesteuert werden kann. Zweckmäßig wird diese variable Turbinengeometrie 48 von der Steuerung 42 bzw. vom Steuergerät 44 angesteuert.

Die hier vorgestellte Brennkraftmaschine 1 bzw. die zugehörige Frischluftanlage 5 kann entsprechend dem nachfolgend beschriebenen Verfahren betrieben werden. Zu diesem Zweck kann die Steuerung 42 und insbesondere auch die Steuerung 14 auf geeignete Weise programmiert bzw. ausgestaltet sein, um besagtes Betriebsverfahren durchführen zu können.

Die Steuerung 42 kann die Schwingrohranlage 18 in wenigstens zwei verschiedenen Modi betreiben, nämlich einerseits in einem Kompressionsmodus und andererseits in einem Expansionsmodus. Im Kompressionsmodus werden Druckschwingungen in der Schwingrohranlage 18 gezielt so erzeugt, dass bei den Gaswechselvorgängen positive Schwingungsamplituden, also Druckberge bzw. bezüglich eines Mitteldrucks Überdruckwellen unmittelbar vor dem Einlassschließen in den jeweiligen Brennraum eintreten und durch das Schließen des Einlasses darin eingeschlossen werden. In der Folge stellt sich im jeweiligen Brennraum 4 eine Erhöhung des Ladedrucks ein. Wird die Schwingrohranlage 18 dagegen im Expansionsmodus betrieben, werden die Druckschwingungen innerhalb der Schwingrohranlage 18 gezielt so erzeugt, dass bei den Gaswechselvorgängen negative Schwingungsamplituden, also Drucktäler bzw. bezüglich des Mitteldrucks Unterdruckwellen unmittelbar vor dem Einlassschließen in den jeweiligen Brennraum eintreten und durch das Schließen des Einlasses im jeweiligen Brennraum 4 eingeschlossen werden. Auf diese Weise erfolgt im jeweiligen Brennraum 4 ein Absenken des Ladedrucks.

Durch die Kopplung mit dem Motorsteuergerät 44 kennt die Steuerung 42 die aktuelle Drehzahl der Brennkraftmaschine 1. Somit kann die Steuerung 42 die Schwingrohranlage 18 abhängig von der aktuellen Drehzahl der Brennkraftmaschine 1 betreiben. So kann vorgesehen sein, die Schwingrohranlage 18 in einem Bereich niedriger Drehzahlen im Kompressionsmodus zu betreiben. Im Bereich niedriger Drehzahlen kann somit der Ladedruck erhöht, die Leistung verbessert und die Energiebilanz der Brennkraftmaschine 1 gesteigert werden. Im Bereich hoher Drehzahlen kann die Steuerung 42 die Schwingrohranlage 18 dagegen im Expansionsmodus betreiben. In der Folge kommt es in den Brennräumen 4 zu einer Druckabsenkung, die mit einer Abkühlung der Luft in den Brennräumen 4 einhergeht, was für eine vorteilhafte Positionierung von Zündzeitpunkten und dergleichen genutzt werden kann, um auch hier die Effizienz der Brennkraftmaschine 1 zu verbessern. In einem mittleren Drehzahlbereich betreibt die Steuerung 42 die Schwingrohranlage 18 zweckmäßig gleich wie im hohen Drehzahlbereich.

Optional kann vorgesehen sein, dass die Steuerung 42 bzw. das Steuergerät 44 im Bereich mittlerer und hoher Drehzahlen zusätzlich zum Expansionsmodus die Aufladeeinrichtung 16 so ansteuert, dass sie den Ladedruck bei nahezu konstanter Ladelufttemperatur erhöht. Hierdurch kann die Druckabsenkung in den Brennräumen 4 mehr oder weniger kompensiert werden. Somit wird im Expansionsmodus der Schwingrohranlage 18 Kompressionsarbeit von der Schwingrohranlage 18 in Richtung Ladeeinrichtung 16 verschoben. Vorteilhaft ist dabei, dass die mit der erhöhten Aufladung einhergehende Erwärmung der Ladeluft im Ladeluftkühler 17 mehr oder weniger ausgeglichen werden kann, sodass durch die Expansionswellen der Schwingrohranlage 18 nach wie vor eine Temperaturreduzierung in den Brennräumen 4 realisierbar ist.

Um den mit Hilfe der Ladeeinrichtung 16 erzeugten Ladedruck zu erhöhen, kann über die Steuerung 42 bzw. über das Steuergerät 44 das Bypassventil 47 so angesteuert werden, dass es einen durch den Bypass 46 geleiteten Bypassstrom reduziert. Im mittleren und höheren Drehzahlbereich ist das Bypassventil 47 mehr oder weniger geöffnet, damit nicht der gesamte Abgasstrom durch die Turbine 19 strömt. Somit besteht gerade bei mittleren und höheren Drehzahlen die Möglichkeit, den Bypassstrom zu reduzieren. Dies führt dazu, dass der durch die Turbine 19 geführte Hauptstrom vergrößert wird, was die Turbinenleistung und somit die Verdichterleistung erhöht, was letztlich zur gewünschten Druckerhöhung der Ladeluft führt.

Zusätzlich oder alternativ kann die Steuerung 42 bzw. die Steuerung 44 die variable Turbinengeometrie 48 zum Reduzieren des Einströmquerschnitts 49 ansteuern, wodurch sich die Strömungsgeschwindigkeit des Abgases am Einlass des Turbinenrads 20 erhöht, was den Rotor aus Turbinenrad 20, Antriebswelle 25 und Verdichterrad 24 beschleunigt und zu einer Erhöhung des Ladedrucks führt. Aufgrund des vergleichsweise großen Abgasvolumenstroms im mittleren und hohen Drehzahlbereich ist - abgesehen von einem Volllastbetrieb - üblicherweise ein vergrößerter Einströmquerschnitt 49 ausreichend, um die gewünschte Aufladung zu realisieren, so dass hier besonders einfach die Möglichkeit besteht, den Ladedruck zum Ausgleichen der durch den Expansionsbetrieb erzeugten Druckabsenkung entsprechend anzuheben.

Darüber hinaus kann die Steuerung 42 mit der Steuerung 14 so zusammenwirken bzw. kann das Steuergerät 44 so konzipiert sein, dass im Bereich niedriger Drehzahlen zum Beschleunigen der Brennkraftmaschine 1 oder zum Beschleunigen des Turboladers 16 während des Kompressionsmodus der Schwingrohranlage 18 der Ventiltrieb 9 zum Erzeugen einer Spülphase am jeweiligen Brennraum 4 angesteuert wird. Während einer derartigen Spülphase sind am jeweiligen Brennraum 4 Einlassventil 7 und Auslassventil 8 gleichzeitig zumindest teilweise geöffnet, derart, dass Ladeluft direkt durch den Brennraum 4 hindurch in die Abgasanlage 6 strömen kann, wodurch die Abgasmenge vergrößert wird. Die vergrößere Abgasmenge erhöht die auf die Turbine 19 übertragbare Antriebsleistung, was zum Beschleunigen der Turbine 19 und somit zum Beschleunigen des Verdichters 22 führt. Die Beschleunigung des Abgasturboladers 16 führt dann rasch zu einem erhöhten Ladedruck, der an der Brennkraftmaschine 1 zum Beschleunigen der Kurbelwelle, also zum Erhöhen der Drehzahl der Brennkraftmaschine 1, genutzt werden kann.

## Patentansprüche

1. Verfahren zum Betreiben einer Brennkraftmaschine (1), insbesondere eines Kraftfahrzeugs, die eine Frischluftanlage (5) mit einer Aufladeeinrichtung (16), mit einem Ladeluftkühler (17) und mit einer variablen Resonanzanlage und/oder einer variablen Schwingrohranlage (18) aufweist,
**dadurch gekennzeichnet,**
- **dass** die Frischluftanlage (5) in einem Bereich niedriger Drehzahlen der Brennkraftmaschine (1) in einem Kompressionsmodus betrieben wird, bei dem Druckschwingungen in der Resonanzanlage und/oder Schwingrohranlage (18) so erzeugt werden, dass bei Gaswechselvorgängen von Brennräumen (4) der Brennkraftmaschine (1) positive Schwingungsamplituden in den Brennräumen (4) eingeschlossen werden und darin den Ladedruck erhöhen,
- **dass** die Frischluftanlage (18) in einem Bereich hoher Drehzahlen der Brennkraftmaschine (1) in einem Expansionsmodus betrieben wird, bei dem Druckschwingungen in der Resonanzanlage und/oder Schwingrohranlage (18) so erzeugt werden, dass bei den Gaswechselvorgängen negative Schwingungsamplituden in den Brennräumen (4) eingeschlossen werden und darin den Ladedruck absenken.

2. Verfahren nach Anspruch 1,
**dadurch gekennzeichnet,**
**dass** im Bereich hoher Drehzahlen außerdem die Aufladeeinrichtung (16) zum Erhöhen des Ladedrucks angesteuert wird.

3. Verfahren nach Anspruch 1 oder 2,
**dadurch gekennzeichnet,**
**dass** die Aufladeeinrichtung (16) als Abgasturbolader ausgestaltet ist, dessen Turbine (19) ein Bypassventil (27) zum Steuern eines die Turbine (19) umgehenden Bypassstroms aufweist, wobei im Bereich hoher Drehzahlen das Bypassventil (47) zum Reduzieren des Bypassstroms angesteuert wird.

4. Verfahren nach einem der Ansprüche 1 bis 3,
**dadurch gekennzeichnet,**
**dass** die Aufladeeinrichtung (16) als Abgasturbolader ausgestaltet ist, dessen Turbine (19) eine variable Turbinengeometrie (48) zum Steuern eines Einströmquerschnitts (49) der Turbine (19) aufweist, wobei im Bereich hoher Drehzahlen die variable Turbinengeometrie (48) zum Reduzieren des Einströmquerschnitts (49) angesteuert wird.

5. Verfahren nach einem der Ansprüche 1 bis 4,
**dadurch gekennzeichnet,**
**dass** die Frischluftanlage (5) über eine Schwingrohranlage verfügt, die eine Verteilerkammer (33) aufweist, von der einzelne Schwingrohre (34) zu den Brennräumen (4) abgehen und zu der ein gemeinsames Zuführrohr (35) hinführt, wobei das gezielte Erzeugen der Druckschwingungen durch Variieren der Länge der Schwingrohre (34) und/oder der Länge des Zuführrohres (35) erfolgt.

6. Verfahren nach einem der Ansprüche 1 bis 5,
**dadurch gekennzeichnet,**
- **dass** die Aufladeeinrichtung (16) als Abgasturbolader ausgestaltet ist,
- **dass** die Brennkraftmaschine (1) einen variablen Ventiltrieb (9) aufweist,
- **dass** im Bereich niedriger Drehzahlen zum Beschleunigen des Abgasturboladers und/oder der Brennkraftmaschine (1) bei den Gaswechselvorgängen der Ventiltrieb (9) zum Erzeugen einer Spülphase angesteuert wird, während der am jeweiligen Brennraum (4) wenigstens ein Einlassventil (7) und wenigstens ein Auslassventil (8) gleichzeitig zumindest teilweise geöffnet sind.

7. Frischluftanlage für eine Brennkraftmaschine (1), insbesondere eines Kraftfahrzeugs,
- mit einer Aufladeeinrichtung (16),
- mit einem Ladeluftkühler (17),
- mit einer variablen Resonanzanlage und/oder einer variablen Schwingrohranlage (18),
**gekennzeichnet durch** eine Steuerung (42) zum Betreiben der Schwingrohr- und/oder Resonanzanlage (18) abhängig von einer Drehzahl der Brennkraftmaschine (1), derart, dass die Steuerung (42) in einem Bereich niedriger Drehzahlen die Schwingrohr- und/oder Resonanzanlage (18) zur Realisierung eines Kompressionsmodus ansteuert, bei dem Druckschwingungen in der Schwingrohr- und/oder Resonanzanlage (18) so erzeugt werden, dass bei Gaswechselvorgängen von Brennräumen (4) der Brennkraftmaschine (1) positive Schwingungsamplituden in den Brennräumen (4) eingeschlossen werden und darin den Ladedruck erhöhen, und in einem Bereich hoher Drehzahlen die schwingrohr- und/oder Resonanzanlage (18) zur Realisierung des Expansionsmodus ansteuert, bei dem Druckschwingungen in der Schwingrohr- und/oder Resonanzanlage (18) so erzeugt werden, dass bei den Gaswechselvorgängen negative Schwingungsamplituden in den Brennräumen (4) eingeschlossen werden und darin den Ladedruck absenken.

8. Frischluftanlage nach Anspruch 7,
**dadurch gekennzeichnet,**
**dass** die Steuerung (42) außerdem zum Betreiben der Aufladeeinrichtung (16) ausgestaltet ist, derart, dass die Steuerung (42) im Bereich hoher Drehzahlen außerdem die Aufladeeinrichtung (16) zum Erhöhen des Ladedrucks ansteuert.

9. Frischluftanlage nach Anspruch 7 oder 8,
**dadurch gekennzeichnet,**
**dass** die Aufladeeinrichtung (16) als Abgasturbolader ausgestaltet ist, dessen Turbine (19) ein Bypassventil (47) zum Steuern eines die Turbine (19) umgehenden Bypassstroms aufweist, wobei die Steuerung (42) zum Betreiben des Bypassventils (47) ausgestaltet ist, derart, dass die Steuerung (42) im Bereich hoher Drehzahlen das Bypassventil (47) zum Reduzieren des Bypassstroms ansteuert.

10. Frischluftanlage nach einem der Ansprüche 7 bis 9,
**dadurch gekennzeichnet,**
**dass** die Aufladeeinrichtung (16) als Abgasturbolader ausgestaltet ist, dessen Turbine (19) eine variable Turbinengeometrie (48) zum Steuern eines Einströmquerschnitts (49) der Turbine (19) aufweist, wobei die Steuerung (42) zum Betreiben der variablen Turbinengeometrie (48) ausgestaltet ist, derart, dass die Steuerung (42) im Bereich hoher Drehzahlen die variable Turbinengeometrie (48) zum Reduzieren des Einströmquerschnitts (49) ansteuert.

11. Frischluftanlage nach einem der Ansprüche 7 bis 10,
**dadurch gekennzeichnet,**
**dass** der Ladeluftkühler (17) eine selbsttätig arbeitende Temperaturregelung für die Temperatur der Ladeluft aufweist.

12. Frischluftanlage nach einem der Ansprüche 7 bis 11,
**dadurch gekennzeichnet,**
**dass** die Schwingrohr- und/oder Resonanzanlage (18) eine Verteilerkammer (33) aufweist, von der einzelne Schwingrohre (34) zu den Brennräumen (4) abgehen und zu der ein gemeinsames Zuführrohr (35) hinführt, wobei die Steuerung (42) zum Betreiben wenigstens einer Stelleinrichtung (36,39) zum Variieren der Länge der Schwingrohre (34) und/oder der Länge des Zuführrohrs (35) ausgestaltet ist, derart, dass die Steuerung (42) zum Erzeugen erwünschter Druckschwingungen die jeweilige Stelleinrichtung (36,39) zum Variieren der Länge der Schwingrohre (34) und/oder der Länge des Zuführrohrs (35) ansteuert.

13. Brennkraftmaschine, insbesondere eines Kraftfahrzeugs,
- mit einer Frischluftanlage (5) nach einem der Ansprüche 6 bis 10,
- mit mehreren Brennräumen (4),
- mit Gaswechselventilen (7,8) zum Steuern von Gaswechselvorgängen der Brennräume (4),
- mit einem Ventiltrieb (9) zum Betätigen der Gaswechselventile (7,8).

14. Brennkraftmaschine nach Anspruch 13,
**dadurch gekennzeichnet,**
- **dass** die Aufladeeinrichtung (16) als Abgasturbolader ausgestaltet ist,
- **dass** der Ventiltrieb (9) als variabler Ventiltrieb (9) ausgestaltet ist,
- **dass** eine Steuerung (14) zum Betreiben des Ventiltriebs (9) so ausgestaltet ist, dass die Steuerung (14) bei niedriger Drehzahl zum Beschleunigen des Abgasturboladers und/oder der Brennkraftmaschine (1) bei Gaswechselvorgängen den Ventiltrieb (9) zum Erzeugen einer Spülphase ansteuert, während der am jeweiligen Brennraum (4) wenigstens ein Einlassventil (7) und wenigstens ein Auslassventil (8) gleichzeitig zumindest teilweise geöffnet sind.
